# EUROPEAN PATENT APPLICATION

(11) **EP 4 502 972 A1**
(43) Date of publication of application: **05.02.2025**
(21) Application number: 22935022.8
(22) Date of filing: 28.03.2022
(51) Int. Cl.: G07D 7/00

(54) **DATA CONVERSION DEVICE, DATA CONVERSION METHOD, AND DATA CONVERSION PROGRAM**

(71) Applicant: Fujitsu Frontech Limited, Inagi-shi, Tokyo 206-8555 (JP)
(72) Inventor: YOSHIMURA, Kazuhisa, Inagi-shi, Tokyo 206-8555 (JP); SAITO, Hirohiko, Inagi-shi, Tokyo 206-8555 (JP); OJI, Katsumi, Inagi-shi, Tokyo 206-8555 (JP); HIRANO, Shinya, Inagi-shi, Tokyo 206-8555 (JP)
(74) Representative: Haseltine Lake Kempner LLP
(86) International application number: PCT/JP2022/014865
(87) International publication number: WO 2023/187867

(57) **Abstract**

A data conversion device includes an acquisition unit that acquires image data output from a first line sensor, and a conversion unit that converts pixel values included in the image data output from the first line sensor, in accordance with correspondence relation data in which a correspondence relation of pixel values is set based on a sensitivity difference for a spectral characteristic between the first line sensor and a second line sensor that is different from the first line sensor.

## Description

### Field

The present invention relates to a data conversion device, a data conversion method, and a data conversion program.

### Background

In a banknote handling device used for an automatic teller machine (ATM) or the like, parameters for banknote identification are set based on an image database, which is a database of image data output from a line sensor.

### Citation List

### Patent Literature

Patent Literature 1: Japanese Patent Application Laid-open No. 2020-28029
Patent Literature 2: Japanese Patent Application Laid-open No. 2004-112627

### Summary

### Technical Problem

However, when the specification of the line sensor is changed, differences in light source arrangement and spectral characteristic between the current and successor models of line sensors appear as sensitivity differences. This results in a difficulty in effectively utilizing the image database for the current model in the development of banknote identification in the successor model.

In one aspect, it is an object to provide a data conversion device, a data conversion method, and a data conversion program that can maintain the compatibility of line sensor outputs between the current and successor models.

### Solution to Problem

An aspect of a data conversion device includes: an acquisition unit that acquires image data output from a first line sensor; and a conversion unit that converts pixel values included in the image data output from the first line sensor, in accordance with correspondence relation data in which a correspondence relation of pixel values is set based on a sensitivity difference for a spectral characteristic between the first line sensor and a second line sensor that is different from the first line sensor.

### Advantageous Effects of Invention

According to one embodiment, the compatibility of line sensor outputs can be maintained between the current and successor models.

### Brief Description of Drawings

FIG. 1 is a block diagram illustrating an example of a functional structure of a server device.
FIG. 2 is a schematic diagram illustrating an application example of an inverse log curve.
FIG. 3 is a diagram illustrating one example of an inverse element gain.
FIG. 4 is a schematic diagram illustrating a generation example of a conversion table.
FIG. 5 is a diagram illustrating examples of image data.
FIG. 6 is a diagram illustrating one example of a cumulative frequency distribution.
FIG. 7 is a diagram illustrating one example of the conversion table.
FIG. 8 is a schematic diagram (1) illustrating a determination example for a watermark part.
FIG. 9 is a schematic diagram (2) illustrating a determination example for the watermark part.
FIG. 10 is a schematic diagram (1) illustrating one example of skew correction.
FIG. 11 is a schematic diagram (2) illustrating one example of the skew correction.
FIG. 12 is a diagram illustrating one example of addition of a transportation filter.
FIG. 13 is a schematic diagram illustrating an application example of a log curve.
FIG. 14 is a flowchart expressing a procedure of a data conversion process.
FIG. 15 is a flowchart expressing a procedure of a watermark blur correction process.
FIG. 16 is a diagram illustrating one aspect of the effect.
FIG. 17 is a diagram illustrating an example of a hardware configuration.

### Description of Embodiments

Examples of a data conversion device, a data conversion method, and a data conversion program according to the present application will be described below with reference to the accompanying drawings. Examples only illustrate examples or aspects, and the range of values and functions, usage scenarios, and the like are not limited by such illustrations. Examples can be combined as appropriate to the extent that the processing contents are not contradictory.

### First embodiment

### <Overall structure>

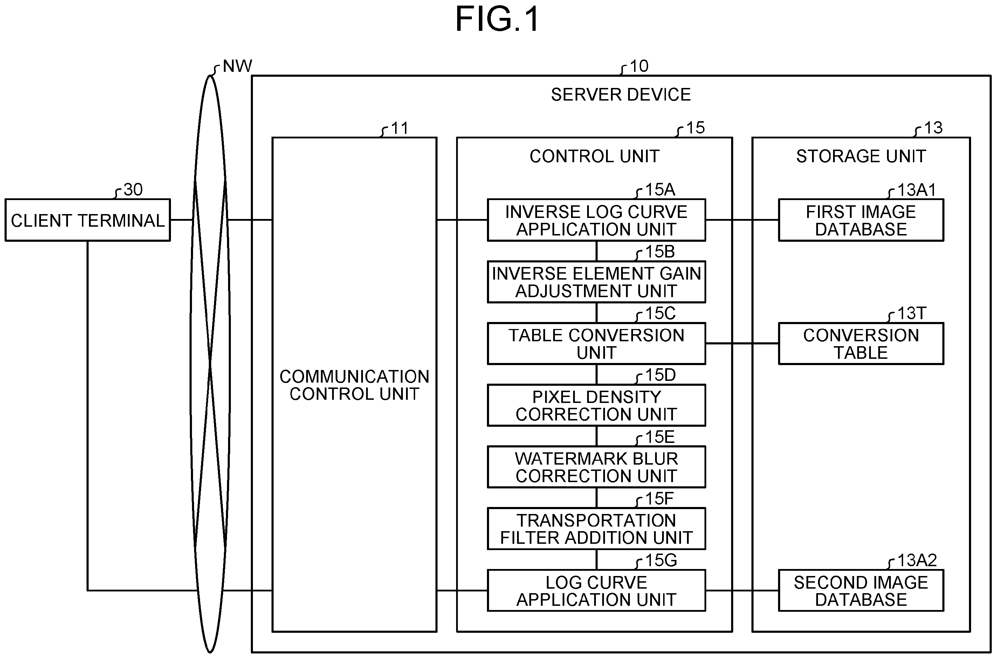

FIG. 1 is a block diagram illustrating an example of a functional structure of a server device 10. The server device 10 illustrated in FIG. 1 provides a data conversion function of converting image data output from a line sensor of the current model into image data corresponding to a line sensor of the successor model from the aspect of maintaining the compatibility of line sensor outputs between the current model and the successor model.

The server device 10 corresponds to one example of a data conversion device that provides the data conversion function described above. As one embodiment, the server device 10 can be realized as a server that provides the above-described data conversion function on-premise. In addition, the server device 10 can provide the above-described data conversion function as a cloud service by realizing this function as "platform as a service (PaaS)" or "software as a service (SaaS)" type application.

The server device 10 can be communicatively connected to a client terminal 30 via a network NW as illustrated in FIG. 1. For example, the network NW may be any type of communication network, either wired or wireless, such as the Internet or a local area network (LAN). Although FIG. 1 illustrates the example of connecting one client terminal 30 per server device 10, any number of client terminals 30 may be connected.

The client terminal 30 corresponds to one example of the terminal device that receives the provision of the data conversion function described above. For example, the client terminal 30 may be realized by a desktop or laptop personal computer or the like. This is merely an example, and the client terminal 30 may be realized by any computer, such as a portable terminal device or a wearable terminal.

Although FIG. 1 illustrates the example where the above-described data conversion function is provided in a client-server system, this is just an example, and the above-described data conversion function may be provided as a stand-alone system.

### <Structure of server device 10>

Next, an example of the functional structure of the server device 10 according to the present example is described. FIG. 1 schematically illustrates blocks related to the data conversion function of the server device 10. As illustrated in FIG. 1, the server device 10 includes a communication control unit 11, a storage unit 13, and a control unit 15. FIG. 1 merely illustrates extracted functional units related to the above-described data conversion function, and functional units other than those illustrated in the drawing may be provided in the server device 10.

The communication control unit 11 is the functional unit that controls communication with other devices including the client terminal 30. As an example, the communication control unit 11 can be realized by a network interface card such as a LAN card. As one aspect, the communication control unit 11 receives a data conversion request from the client terminal 30 to convert image data of the current model into image data of the successor model, or outputs a data conversion result to the client terminal 30, for example.

The storage unit 13 is the functional unit that stores various kinds of data therein. As an example, the storage unit 13 is realized by internal, external, or auxiliary storage of the server device 10. For example, the storage unit 13 stores a first image database 13A1, a second image database 13A2, and a conversion table 13T therein.

The first image database 13A1 and the second image database 13A2 are both databases in which a set of image data output from the line sensors is managed. As an example, pieces of image data are collected in the first image database 13A1 and the second image database 13A2 by country, money type, condition such as stained or damaged, and wavelength of reflection, transmission, or the like.

In an example given below, the first image database 13A1 is for a set of image data output from the line sensor of the current model, while the second image database 13A2 is for a set of image data output from the line sensor of the successor model. The line sensor of the current model and the line sensor of the successor model correspond to one example of a first line sensor and a second line sensor, and the image data of the current model and the image data of the successor model correspond to one example of first image data and second image data, respectively.

As one aspect, the first image database 13A1 and the second image database 13A2 can be used to set parameters to be used by software, e.g., firmware, for banknote identification that is incorporated into a banknote handling device. As another aspect, the first image database 13A1 and the second image database 13A2 can be used to create a template to be used as a reference during matching at banknote identification that is incorporated into the banknote handling device. Thus, the first image database 13A1 and the second image database 13A2 are used for the firmware at the banknote identification or as development assets for generating and testing templates to be used as references during matching, for example.

The description of the conversion table 13T will be made below when the conversion table 13T is used as a reference.

The control unit 15 is the functional unit that performs overall control of the server device 10. For example, the control unit 15 can be realized by a hardware processor. As illustrated in FIG. 1, the control unit 15 includes an inverse log curve application unit 15A, an inverse element gain adjustment unit 15B, a table conversion unit 15C, a pixel density correction unit 15D, a watermark blur correction unit 15E, a transportation filter addition unit 15F, and a log curve application unit 15G. The control unit 15 may be realized by hard wired logic or the like.

The following is an example of a trigger that starts the provision of the data conversion function, in which a data conversion request is received from the client terminal 30 to convert the image data of the current model into the image data of the successor model. At the time of such a data conversion request, in one example, the designation of the image data of the current model to request the conversion into the image data of the successor model among the first image database stored in the storage unit 13 can be received.

The inverse log curve application unit 15A is a processing unit that applies an inverse log curve to the image data for the line sensor of the current model.

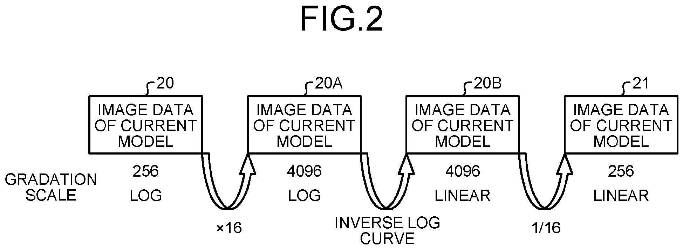

FIG. 2 is a schematic diagram illustrating an application example of the inverse log curve. FIG. 2 illustrates an example of image data 20 of the current model designated in the data conversion request, in which each pixel has 256 gradations expressed based on a log scale.

As illustrated in FIG. 2, for each pixel included in the image data 20 of the current model, the gradation value of that pixel is multiplied by a specific factor, for example, 16 times in the example illustrated in FIG. 2. Thus, the image data 20 of the current model is converted into image data 20A with 4096 gradations, which is 16 times the original gradations.

Subsequently, the inverse log curve in which the gain to inversely convert the log scale into a linear scale is set is applied to the image data 20A with 4096 gradations. As a result, for each pixel included in the image data 20A with 4096 gradations, the gain of the inverse log curve corresponding to the gradation value of that pixel is multiplied, so that the gradation expression is converted from the log scale into the linear scale.

For each pixel included in image data 20B with 4096 gradations to which the inverse log curve has been applied in this manner, the gradation value of that pixel is multiplied by the inverse of the above factor, that is, 1/16 times. This produces image data 21 of the current model with 256 gradations in accordance with the linear scale.

The inverse element gain adjustment unit 15B is a processing unit that performs inverse element gain adjustment on the image data after the inverse log curve is applied. In one aspect, such inverse element gain adjustment is performed from the aspect of correcting the output of the line sensor of the current model, which fluctuates due to an influence from a banknote transportation mechanism such as a belt.

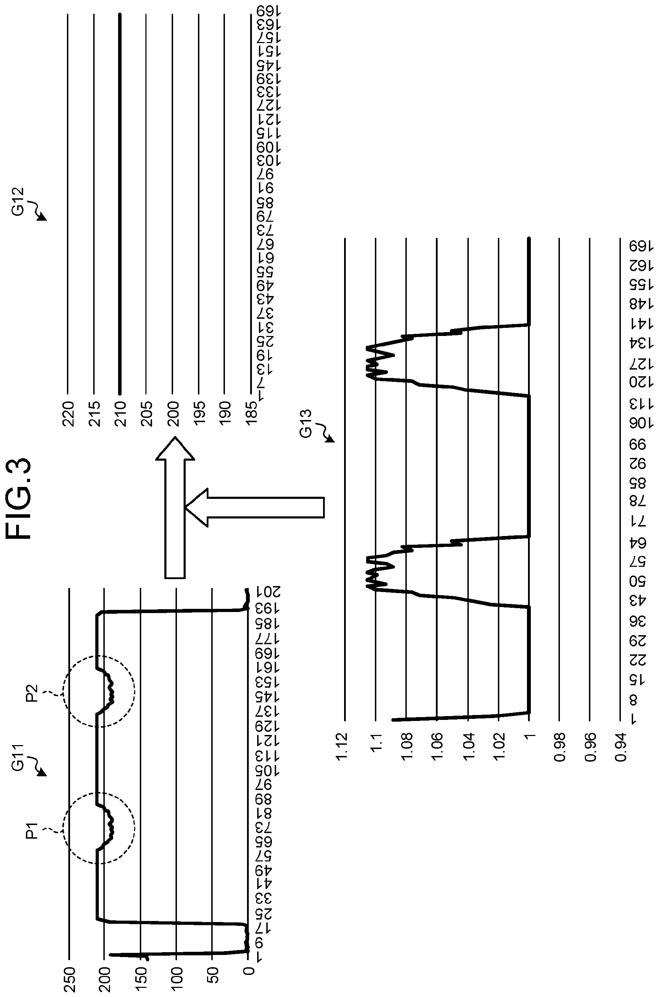

FIG. 3 is a diagram illustrating one example of the inverse element gain. FIG. 3 illustrates a graph G11, which expresses the output in a case where a medium with uniform reflection density and transmission density, for example, a medium whose entire surface is adjusted to have a density with a gradation value "210" is read by the line sensor of the current model. The horizontal axis of this graph G11 represents N (= 210) imaging elements arrayed on a straight line in a direction that is orthogonal to a banknote transportation direction, and the vertical axis represents the gradation value output by each imaging element.

The graph G11 in FIG. 3 indicates that the output decreases in a range R1 from the 50th to the 89th imaging elements and in a range R2 from the 130th to the 169th imaging elements. One of the reasons for the output decrease in these ranges R1 and R2 is that the focal point position changes due to the influence from the belt in the transportation system.

Therefore, from the aspect of eliminating the influence of the belt, a coefficient at which the output of the imaging element of the line sensor expressed in the graph G11 becomes a target value of the line sensor expressed in a graph G12 is back-calculated based on the result of imaging of the above-described medium by the line sensor of the current model. The gain of the imaging element obtained by such back calculation, i.e., the ratio between input and output corresponding to a graph G13 expressed in FIG. 3, is set as the coefficient to be multiplied by the output of the line sensor of the current model.

Under the above-described inverse element gain setting, the inverse element gain adjustment unit 15B multiplies the pixels in a main scanning direction in the image data of the current model by the inverse element gain corresponding to the graph G13 illustrated in FIG. 3.
Thus, the output decrease of the imaging elements corresponding to the ranges R1 and R2 is adjusted to the target value, so that the influence from the belt is eliminated.

The table conversion unit 15C is a processing unit that converts the image data of the current model after the inverse element gain adjustment into the image data for the successor model in accordance with the conversion table 13T stored in the storage unit 13.

Here, the conversion table 13T is data in which the correspondence relation between inputs and outputs regarding the gradation values is set. As an example, the conversion table 13T is set by histogram matching of two pieces of image data obtained when two line sensors of the current model and the successor model read the same medium, for example, a banknote.

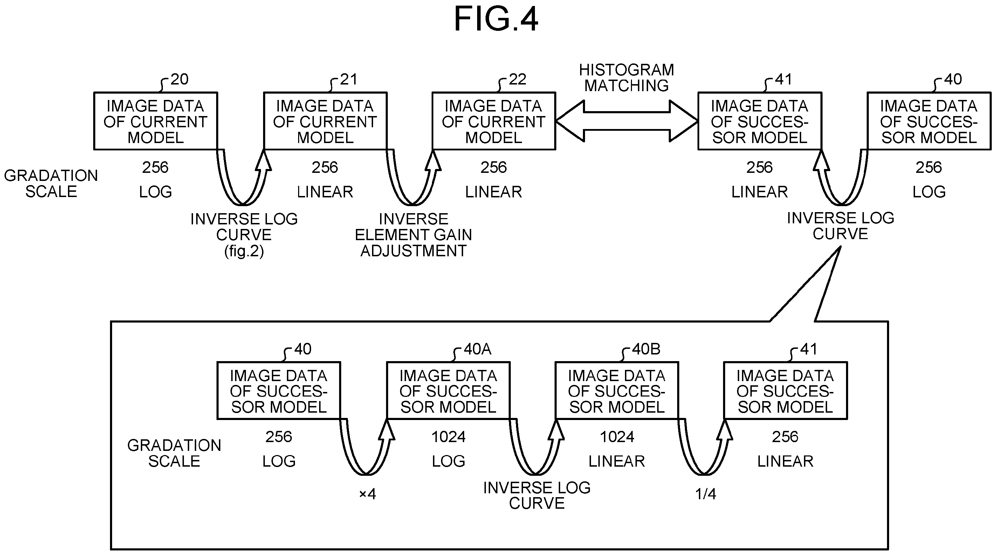

FIG. 4 is a schematic diagram illustrating a generation example of the conversion table 13T. As illustrated in FIG. 4, the gradation expressions of the image data 20 of the current model and image data 40 of the successor model are aligned to the linear scale in a preliminary stage of the histogram matching.

For example, the inverse log curve illustrated in FIG. 2 is applied to the image data 20 of the current model and as a result, the image data 21 of the current model with 256 gradations in accordance with the linear scale is obtained. Furthermore, the inverse element gain corresponding to the graph G13 illustrated in FIG. 3 is multiplied by the pixels in the main scanning direction in the image data 21 of the current model. Thus, image data 22 of the current model in which the influence from the transportation system has been eliminated is obtained.

On the other hand, for each pixel included in the image data 40 of the successor model, the gradation value of that pixel is multiplied by a specific factor, for example, four times in the example illustrated in FIG. 4. Thus, the image data 40 of the successor model is converted into image data 40A with 1024 gradations, which is four times the original gradations.

Subsequently, the inverse log curve in which the gain to inversely convert the log scale into the linear scale is set is applied to the image data 40A with 1024 gradations. As a result, for each pixel included in the image data 40A with 1024 gradations, the gain of the inverse log curve corresponding to the gradation value of that pixel is multiplied, so that the gradation expression is converted from the log scale into the linear scale.

For each pixel included in image data 40B with 1024 gradations to which the inverse log curve has been applied in this manner, the gradation value of that pixel is multiplied by the inverse of the above factor, that is, 1/4 times. This produces image data 41 of the successor model with 256 gradations in accordance with the linear scale.

The histogram matching is performed based on the cumulative frequency distribution calculated for each piece of the image data 22 of the current model and the image data 41 of the successor model. As a result, a look-up table that converts the gradation values of the image data 22 of the current model into the gradation values corresponding to the image data 41 of the successor model can be generated as the conversion table 13T.

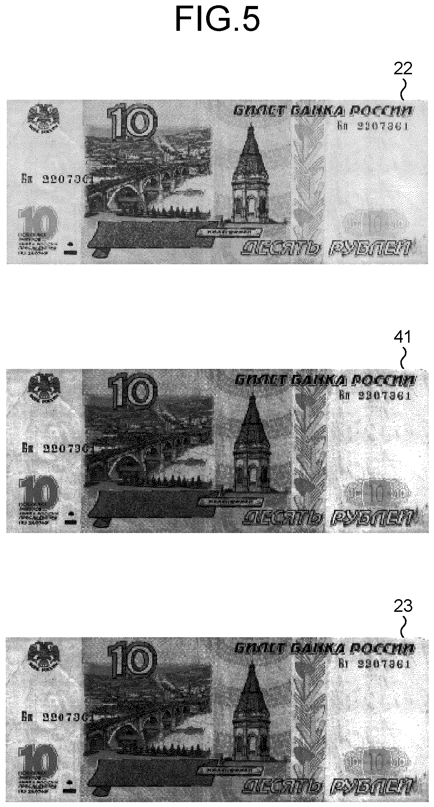

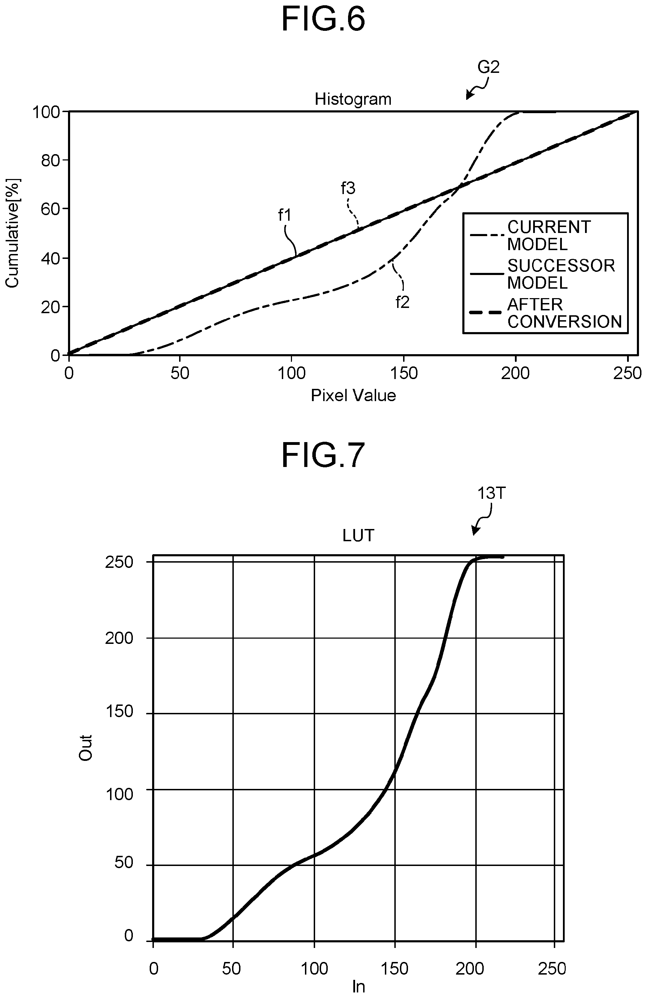

FIG. 5 is a diagram illustrating examples of the image data. FIG. 6 is a diagram illustrating one example of a cumulative frequency distribution. FIG. 7 is a diagram illustrating one example of the conversion table 13T. FIG. 5 illustrates the image data 22 and the image data 41 obtained when the same banknote is read with the two line sensors of the current model and the successor model. For example, the cumulative frequency distribution illustrated in FIG. 6 can be calculated from the image data 22 of the current model illustrated in FIG. 5 and the image data 41 of the successor model illustrated in FIG. 5.

FIG. 6 illustrates a graph G2 with the pixel values on the horizontal axis and the cumulative frequency on the vertical axis. For example, the cumulative frequency distribution of the image data 22 of the current model illustrated in FIG. 5 corresponds to a cumulative distribution function f1 illustrated in FIG. 6, while the cumulative frequency distribution of the image data 41 of the successor model illustrated in FIG. 5 corresponds to a cumulative distribution function f2 illustrated in FIG. 6. The histogram matching is performed to derive a function that maps the input corresponding to the cumulative distribution function f1 to the target value corresponding to the cumulative distribution function f2. Thus, as illustrated in FIG. 7, the conversion table 13T in which the input and output correspondence relation with respect to the pixel values are defined is obtained.

As an example, description is made of a case where the conversion table 13T is applied using the image data 22 of the current model illustrated in FIG. 5 as the input data. In this case, for each pixel included in the image data 22 of the current model, the pixel value of that pixel is taken as the input, and that input is converted into the pixel value of the output corresponding to the input in accordance with the conversion table 13T illustrated in FIG. 7. As a result, the image data 22 of the current model illustrated in FIG. 5 is converted into the image data 23 corresponding to the successor model illustrated in FIG. 5.

According to the image data 22 of the current model and the image data 41 of the successor model, it is clear that there is a sensitivity difference based on the spectral characteristic between the line sensor of the current model and the line sensor of the successor model. Furthermore, according to the image data 22 of the current model and the image data 23 of the successor model, it is clear that data conversion can be realized to match the sensitivity corresponding to the line sensor of the current model to the sensitivity corresponding to the line sensor of the successor model.

A pixel density correction unit 15D is a processing unit that corrects the pixel density of the pixel data for the successor model. As an embodiment, the pixel density correction unit 15D enlarges or reduces the size of the image data for the successor model in accordance with the magnification factor to match the pixel density of the line sensor of the current model with that of the line sensor of the successor model. For example, if the pixel density of the line sensor of the current model is larger than that of the line sensor of the successor model, the size of the image data for the successor model is reduced. In this case, pixels may be thinned out by size reduction, or the background pixel values may be assigned to some pixels without changing the number of pixels. On the other hand, if the pixel density of the line sensor of the current model is smaller than that of the line sensor of the successor model, the image data for the successor model is enlarged. Needless to say, any interpolation method can be applied to such enlargement or reduction, for example, a bilinear or bicubic method.

The watermark blur correction unit 15E is a processing unit that corrects the degree of blurring in a watermark part according to the difference between a gap between a banknote transportation path and the imaging element of the line sensor of the current model and a gap between a banknote transportation path and the imaging element of the line sensor of the successor model. The gap between the banknote transportation path and the imaging element of the line sensor of the current model corresponds to one example of a first gap, and the gap between the banknote transportation path and the imaging element of the line sensor of the successor model corresponds to one example of a second gap.

As one aspect, if the gap of the current model is smaller than the gap of the successor model, the watermark blur correction unit 15E performs a blurring process on the watermark part of the image data for the successor model after the pixel density correction to a degree corresponding to the gap difference. Such a blurring process may be achieved by applying a low-pass filter, e.g., a Gaussian filter, to the watermark part, which is just an example.

As another aspect, if the gap of the current model is larger than the gap of the successor model, the watermark blur correction unit 15E performs a sharpening process to sharpen the watermark part of the image data for the successor model after the pixel density correction to a degree corresponding to the gap difference. Such a sharpening process may be achieved by applying a high-pass filter, such as a sharpening filter or an edge enhancement filter, to the watermark part, which is just one example.

Here, the above-described watermark part can be specified by extracting a region in the image data for the successor model after the pixel density correction, where the amount of feature that appears at a reflection wavelength and the amount of feature that appears at a transmission wavelength satisfy a particular condition.

As an example, the watermark blur correction unit 15E applies a filter with a specific kernel size, such as 5 × 5, to each piece of image data corresponding to the transmission wavelength among the pieces of image data for the respective wavelengths of the reflection wavelength and the transmission wavelength. For example, the watermark blur correction unit 15E applies the filter by overlapping the origin of the filter in the order from the pixel at the origin of the image data corresponding to the transmission wavelength, for example from the upper left pixel. Hereinafter, the pixel that is overlapped on the origin of the filter when the filter is applied may be described as "pixel of interest".

Each time the filter is applied in this manner, the watermark blur correction unit 15E calculates the difference between the pixel value in the kernel at the time the current filter is applied and the pixel value in the kernel at the time the previous filter is applied. The difference between the pixel value in the kernel at the time of the application of the current filter and the pixel value in the kernel at the time of the application of the previous filter may be described as "adjacent difference". For example, the difference of the pixel values is calculated between elements existing at the same position in the kernels, and the statistics of the differences calculated between the elements existing at the same position, such as the sum or average value, are calculated; thus, the representative value of the differences can be calculated as the "adjacent difference".

If the adjacent differences for all transmission wavelengths are more than or equal to a threshold Th1, the watermark blur correction unit 15E overlaps the origin of the filter on the pixel of interest for each piece of image data corresponding to the reflection wavelength. Thus, the above-described filter is further applied to the image data corresponding to the reflection wavelength. The watermark blur correction unit 15E then calculates the adjacent difference between the pixel value in the kernel at the time of the application of the current filter and the pixel value in the kernel at the time of the application of the previous filter.

Here, if the adjacent differences for all reflection wavelengths are less than or equal to a threshold Th2, it is found that the pixel to which the above-described filter is applied is likely to correspond to the watermark part. In this case, the watermark blur correction unit 15E saves the coordinate of the pixel of interest as an element corresponding to the watermark part in an internal memory, which is not illustrated, for example.

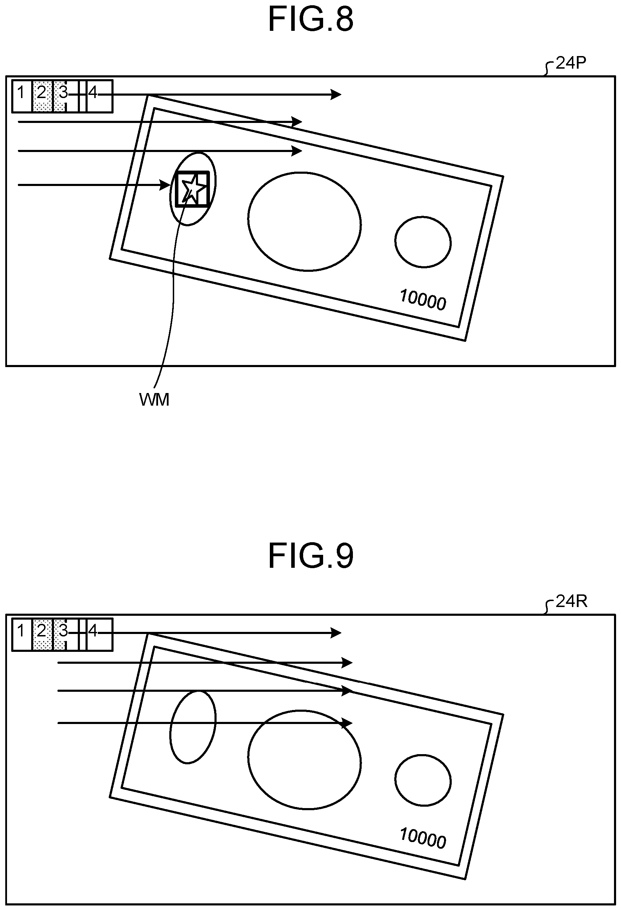

FIG. 8 and FIG. 9 are schematic diagrams (1) and (2) illustrating determination examples for the watermark part. FIG. 8 schematically illustrates a state in which the filter is moved on image data 24P corresponding to the transmission wavelength in image data 24 for the successor model after the pixel density correction. On the other hand, FIG. 9 schematically illustrates a state in which the filter is moved on image data 24R corresponding to the reflection wavelength in the image data 24 for the successor model after the pixel density correction.

As illustrated in FIG. 8, when the filter exists at the position in a background part without a banknote, the pixel values are saturated toward white, so that the adjacent difference with respect to the transmission wavelength is unlikely to occur. When the filter exists at an edge part of the banknote, the adjacent difference with respect to the transmission wavelength can occur. However, even if the filter exists at the edge part of the banknote, the adjacent difference with respect to the reflection wavelength also occurs at the same time, as illustrated in FIG. 9. Thus, it is possible to prevent the edge part of the banknote from being mistakenly determined to be the watermark part. Furthermore, when the filter exists in a watermark part WM, it is understood that the adjacent difference with respect to the transmission wavelength increases, as illustrated in FIG. 8. On the other hand, even if the filter exists in the watermark part WM, the adjacent difference with respect to the transmission wavelength that is more than or equal to a certain value does not occur easily, as illustrated in FIG. 9.
Therefore, the watermark part WM can be extracted accurately.

Such processes including the application of the filter, the determination of the adjacent difference with respect to the transmission wavelength, the determination of the adjacent difference with respect to the reflection wavelength, saving of the element corresponding to the watermark part, and the like are iterated while the pixel of interest is shifted until the origin of the filter is applied to the end point of the image, for example the lower right vertex of the image.

In the case of shifting the pixel of interest to which the filter is applied, in the main scanning direction and a sub-scanning direction, shifting the pixel one by one is not always demanded and the pixel of interest may be shifted for every arbitrary number of pixels.

In this example, the threshold Th1 is commonly used to determine the adjacent difference for each transmission wavelength and the threshold Th2 is commonly used to determine the adjacent difference for each reflection wavelength; however, thresholds different for all wavelengths may be set alternatively.

Furthermore, although the adjacent difference is calculated for each of all the transmission wavelengths and all the reflection wavelengths here, the calculation of the adjacent difference for each of all the transmission wavelengths and all the reflection wavelengths is not always demanded. For example, the adjacent difference may be calculated for any one of the transmission wavelengths and any one of the reflection wavelengths.

The transportation filter addition unit 15F is a processing unit that adds a transportation filter for the successor model to the image data for the successor model after the watermark blur correction.

In one example, the transportation filter addition unit 15F extracts a part corresponding to the banknote from the image data for the successor model after the watermark blur correction. More specifically, the transportation filter addition unit 15F binarizes the image data corresponding to the transmission wavelength and applies a morphological process to the binarized image to smooth out an uneven part. The transportation filter addition unit 15F then extracts contour lines from the binarized image on which the morphology process has been performed, and calculates the center of gravity position from the banknote region formed by the contour lines. Hereinafter, a partial image corresponding to the banknote region in the image for the successor model may be described as "banknote image".

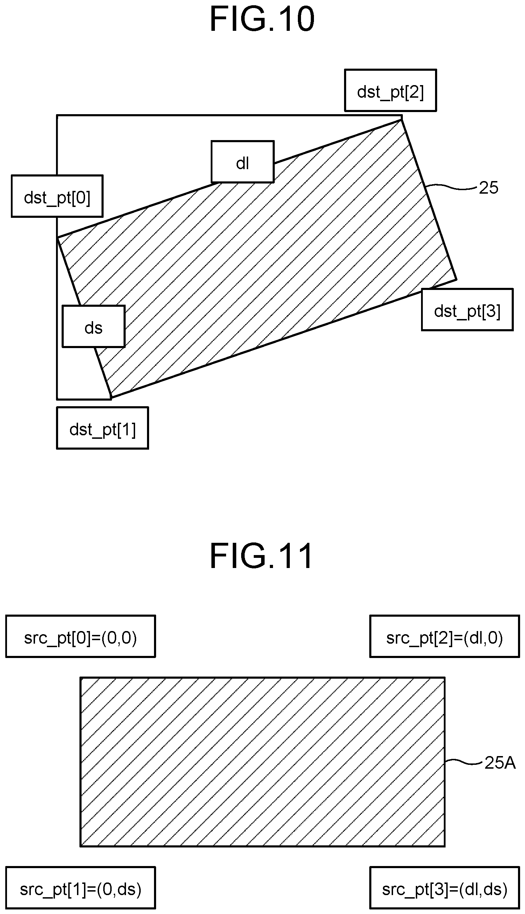

The transportation filter addition unit 15F then performs skew correction to correct the skew of the banknote in the image data for the successor model. FIG. 10 and FIG. 11 are schematic diagrams (1) and (2), illustrating one example of the skew correction. FIG. 10 illustrates image data 25 before the skew correction while FIG. 11 illustrates image data 25A after the skew correction. As illustrated in FIG. 25, a short side ds and a long side dl of a rectangle corresponding to a banknote are calculated based on the four vertices of the image data 25 for the successor model. Then, as illustrated in FIG. 26, the coordinates with no skew on the short side ds and the long side dl, i.e., src_pt[0] = (0, 0), src_pt[1] = (0, ds), src_pt[2] = (dl, 0), and src_pt[3] = (dl, ds) are set. By performing a projective transformation on the image data 25 on the basis of these coordinates, the image data 25A for the successor model after the skew correction is obtained.

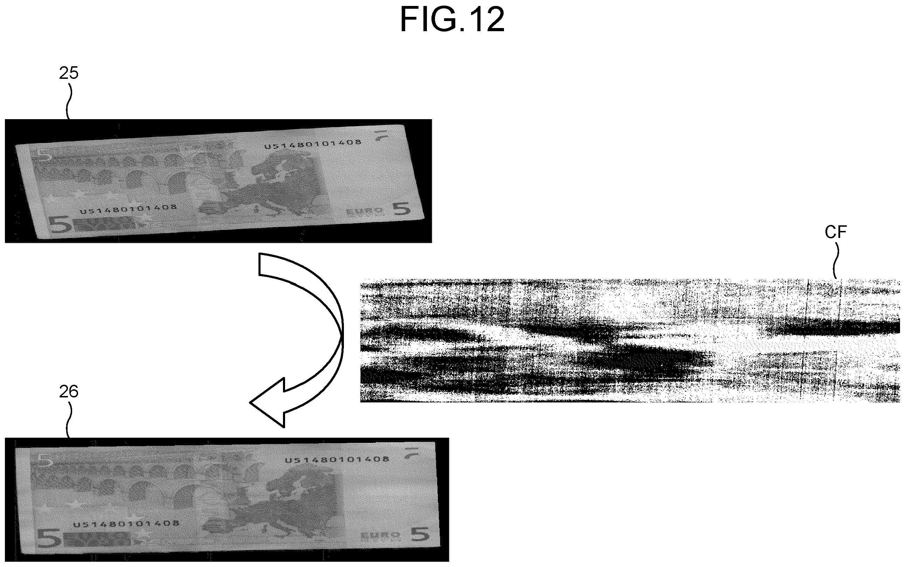

Then, the transportation filter addition unit 15F adds the transportation filter that reflects the influence of the transportation mechanism for the successor model, such as a belt, to the image data for the successor model after the skew correction. FIG. 12 is a diagram illustrating one example of the addition of the transportation filter. As illustrated in FIG. 12, after the skew correction is performed, a transportation filter CF is added to the image data 25 for the successor model after the watermark blur correction. For example, the transportation filter CF is set based on the difference between the density of the medium with the uniform reflection density and transmission density and the output when the above-described medium is read by the line sensor of the successor model. Thus, the transportation filter CF with which the coefficient, i.e., the ratio of the output to the input is associated for each pixel is obtained. By multiplying the transportation filter CF by the image data for the successor model after the skew correction, image data 26 to which the influence from the transportation mechanism for the successor model, such as a belt, is added can be obtained.

The log curve application unit 15G is a processing unit that applies a log curve to the image data for the successor model after the transportation filter is added.

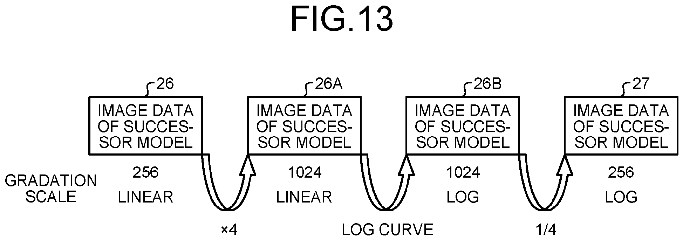

FIG. 13 is a schematic diagram illustrating an application example of the log curve. As illustrated in FIG. 13, for each pixel included in the image data 26 for the successor model, the gradation value of that pixel is multiplied by a specific factor, for example, by four times in the example illustrated in FIG. 13. As a result, the image data 26 for the successor model is converted into image data 26A with 1024 gradations, which is four times the original gradations.

The log curve in which the gain to convert the linear scale into the log scale is set is then applied to the image data 26A with 1024 gradations. As a result, for each pixel included in the image data 26A with 1024 gradations, the gain of the log curve corresponding to the gradation value of that pixel is multiplied, so that the gradation expression is converted from the linear scale into the log scale.

For each pixel included in image data 26B with 1024 gradations to which the log curve has been applied in this manner, the gradation value of that pixel is multiplied by the inverse of the above factor, i.e., 1/4 times. Thus, image data 27 for the successor model with 256 gradations corresponding to the log scale is obtained as the final output.

Such image data for the successor model can be output to any output destination as the data conversion result. In one example, the data conversion result can be output to external devices including the client terminal 30, or software, services, or the like that uses the data conversion result. In addition, the data conversion result can be added to and saved in the second image database 13A2.

### <Procedure of process>

Next, the procedure of the process of the server device 10 according to the present example will be described. Here, description is made of (1) the data conversion process performed by the server device 10 and then (2) the watermark blur correction process.

### (1) Data conversion process

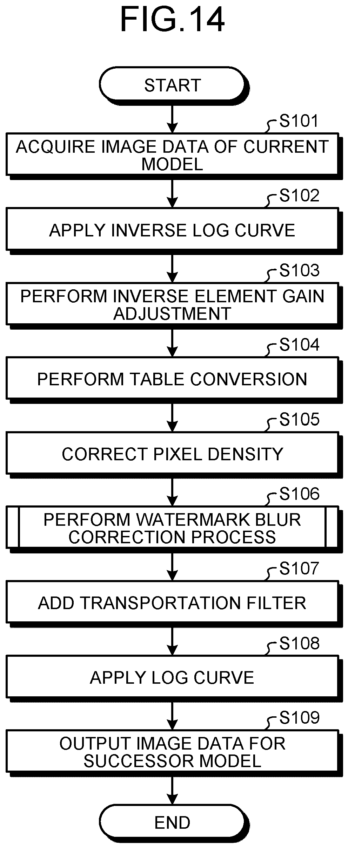

FIG. 14 is a flowchart expressing the procedure of the data conversion process. In one example, this process can be started when a data conversion request to convert the image data of the current model into the image data of the successor model is received from the client terminal 30.

As illustrated in FIG. 14, the inverse log curve application unit 15A acquires the image data of the current model specified in the data conversion request from the first image database 13A1 (step S101).

Subsequently, the inverse log curve application unit 15A applies the inverse log curve in which the gain to inversely convert the log scale into the linear scale is set, to the image data of the current model acquired at step S101 (step S102).

Then, the inverse element gain adjustment unit 15B performs inverse element gain adjustment on the image data to which the inverse log curve has been applied at step S102 (step S103).

The table conversion unit 15C then converts the image data of the current model for which the inverse element gain adjustment has been performed at step S103 into the image data for the successor model in accordance with the conversion table 13T (step S104).

Next, the pixel density correction unit 15D enlarges or reduces the size of the image data for the successor model converted at step S104 in accordance with the magnification factor to match the pixel density of the line sensor of the current model with that of the line sensor of the successor model (step S105).

The watermark blur correction unit 15E then corrects the degree of blurring in the watermark part according to the difference between the gap between the banknote transportation path and the imaging element of the line sensor of the current model and the gap between the banknote transportation path and the imaging element of the line sensor of the successor model (step S106).

Then, the transportation filter addition unit 15F adds the transportation filter for the successor model to the image data for the successor model after the degree of blurring is corrected in the watermark part at step S106 (step S107).

Finally, the log curve application unit 15G applies the log curve to the image data for the successor model to which the transportation filter has been added at step S107 (step S108), outputs as a data conversion result (step S109), and terminates the process.

### (2) Watermark blur correction process

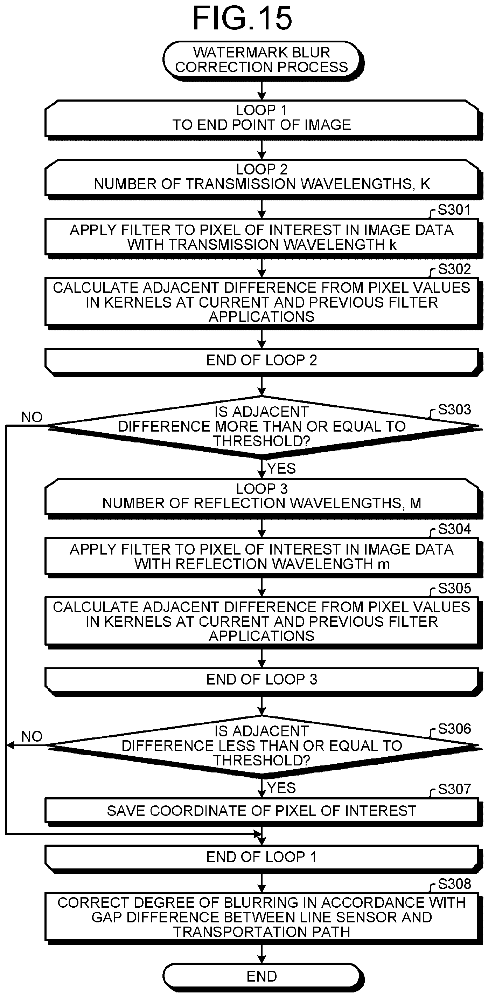

FIG. 15 is a flowchart expressing the procedure of the watermark blur correction process. This process corresponds to step S106 illustrated in FIG. 14. As illustrated in FIG. 15, the watermark blur correction unit 15E performs a loop process 1, which iterates the process from step S301 below to step S307 below while shifting the pixel of interest until the origin of the filter is applied to the end point of the image, for example, the lower right vertex of the image.

Furthermore, the watermark blur correction unit 15E performs a loop process 2, which repeats the process of step S301 below and step S302 below for the number of times corresponding to the number of types K corresponding to the transmission wavelengths among the image data for the respective wavelengths of the reflection wavelengths and the transmission wavelengths.

In other words, the watermark blur correction unit 15E applies the filter by overlapping the origin of the filter on the pixel of interest in the image data corresponding to a transmission wavelength k (step S301). Then, the watermark blur correction unit 15E calculates the adjacent difference with respect to the transmission wavelength k between the pixel value in the kernel at the time of the application of the current filter and the pixel value in the kernel at the time of the application of the previous filter (step S302).

The loop process 2 as above is iterated to obtain the result of calculating the adjacent difference for each transmission wavelength k. When the above-described loop process 2 is completed, the watermark blur correction unit 15E determines whether the adjacent differences for the K transmission wavelengths are more than or equal to the threshold Th1 (step S303).

If the adjacent differences for the K transmission wavelengths are more than or equal to the threshold Th1, the watermark blur correction unit 15E performs a loop process **3,** which repeats the process of step S304 below and step S305 below for the number of times corresponding to the number of types M corresponding to the reflection wavelengths.

In other words, the watermark blur correction unit 15E applies the filter by overlapping the origin of the filter on the pixel of interest in the image data corresponding to a reflection wavelength m (step S304). Then, the watermark blur correction unit 15E calculates the adjacent difference with respect to the reflection wavelength m between the pixel value in the kernel at the time of the application of the current filter and the pixel value in the kernel at the time of the application of the previous filter (step S305).

The loop process 3 as above is iterated to obtain the result of calculating the adjacent difference for each reflection wavelength **m.** When the above loop process 3 is completed, the watermark blur correction unit 15E determines whether the adjacent differences for the M reflection wavelengths are less than or equal to the threshold Th2 (step S306).

Here, if the adjacent differences for all reflection wavelengths are less than or equal to the threshold Th2 (Yes at step S306), it is found that the pixel to which the above filter has been applied is likely to correspond to the watermark part. In this case, the watermark blur correction unit 15E saves the coordinate of the pixel of interest as an element corresponding to the watermark part in an internal memory or the like, which is not illustrated (step S307).

This loop process 1 is iterated to obtain a set of coordinates of the pixels corresponding to the watermark part. When the above loop process 1 is completed, the watermark blur correction unit 15E terminates the process illustrated in FIG. 15 and advances the process to step S107 illustrated in FIG. 14.

### <One aspect of effects>

As described above, the server device 10 in the present example can convert the image data corresponding to the line sensor of the current model into the image data corresponding to the line sensor of the successor model. Therefore, by the server device 10 according to the present example, the compatibility of the line sensor outputs can be maintained between the current and successor models.

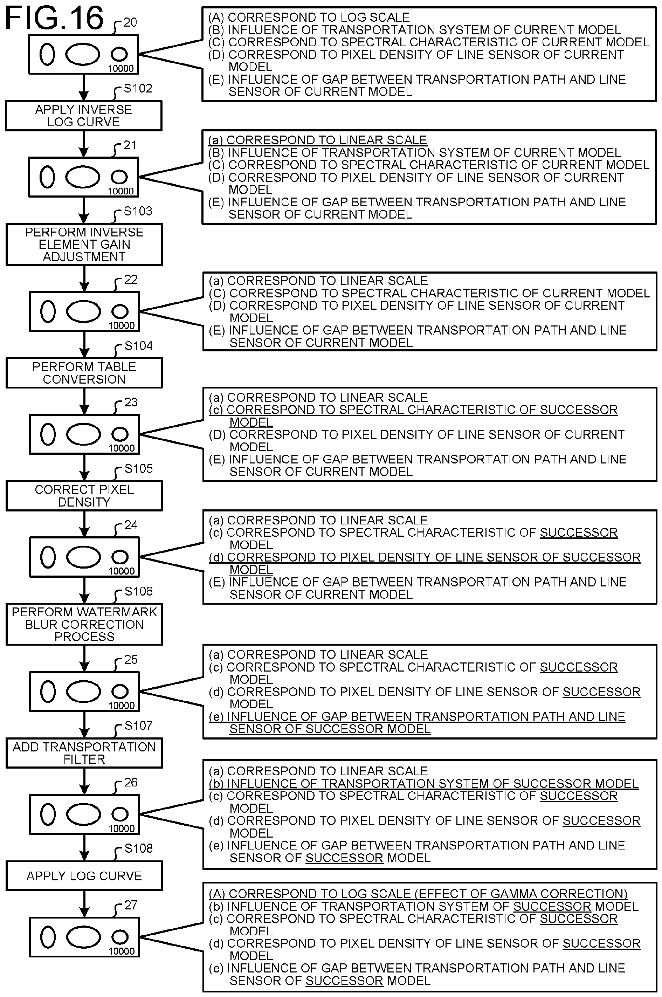

One aspect of the effect of the process at each step illustrated in FIG. 14, for example, the technical significance will be described below. FIG. 16 is a diagram illustrating one aspect of the effect. The image data 20 of the original current model includes the influences listed in (A) through (E) illustrated in FIG. 16. By applying the inverse log curve to the image data 20 of the current model at step S102 above, the image data 21 of the current model corresponding to the linear scale can be obtained as described in (a).

Then, the inverse element gain adjustment is performed on the image data 21 of the current model after the application of the inverse log curve at step S103 above, thereby obtaining the image data 22 of the current model in which (B) the influence of the transportation system of the current model has been eliminated.

Furthermore, the image data 22 of the current model after the inverse element gain adjustment is subjected to the table conversion at step S104 above to eliminate (C) the influence of the spectral characteristic of the current model and obtain the image data 23 for the successor model, which (c) corresponds to the spectral characteristic of the successor model.

Then, by correcting the pixel density in the image data 23 for the successor model after the table conversion at step S105 above, the image data 24 for the successor model (d) corresponding to the pixel density or resolution of the successor model is obtained.

Then, the degree of blurring of the watermark part of the image data 24 for the successor model after pixel density correction in step S106 above is corrected. Accordingly, (E) the influence of the gap between the transportation path and the line sensor of the current model is eliminated and (e) the image data 25 for the successor model, which corresponds to the gap between the transportation path and the line sensor of the successor model is obtained.

In addition, the transportation filter is added to the image data 25 for the successor model after the degree of blurring of the watermark part is corrected at step S107 above, so that the image data 26 for the successor model with (b) the influence of the transportation system of the successor model added is obtained.

Finally, by applying the log curve to the image data 26 for the successor model after the transportation filter is added at step S108 above, (A) the image data 27 for the successor model corresponding to the log scale is obtained as the final output.

In the image data 27 for the successor model obtained in this manner, (B) and (C), which correspond to the current model, can be eliminated and the influence of (b) to (e), which correspond to the successor model, can be reflected. Thus, the compatibility of the line sensor outputs can be maintained in multiple aspects between the current and successor models.

Although all processes from step S102 to step S108 are performed in this example, performing all the processes are not always demanded, and just some of the processes may be performed.

### [Example 2]

Examples related to the disclosed device have been described so far; however, the present invention may be implemented in a variety of different forms in addition to Examples described above. Therefore, other Examples included in the present invention are described below.

### <Distribution and integration>

In addition, configuring each component of each device in the drawings physically as illustrated is not always demanded. In other words, the specific form of distribution and integration of each device is not limited to that illustrated in the drawing and can be configured by functionally or physically distributing and integrating all or part of the device in arbitrary units according to various loads, usage conditions, and the like. For example, the inverse log curve application unit 15A, the inverse element gain adjustment unit 15B, the table conversion unit 15C, the pixel density correction unit 15D, the watermark blur correction unit 15E, the transportation filter addition unit 15F, or the log curve application unit 15G may be connected via a network as an external device of the server device 10. In addition, the inverse log curve application unit 15A, the inverse element gain adjustment unit 15B, the table conversion unit 15C, the pixel density correction unit 15D, the watermark blur correction unit 15E, the transportation filter addition unit 15F, and the log curve application unit 15G are possessed by different devices and connected to the network so as to work together. Thus, the functions of the server device 10 described above may be achieved.

### <Hardware configuration>

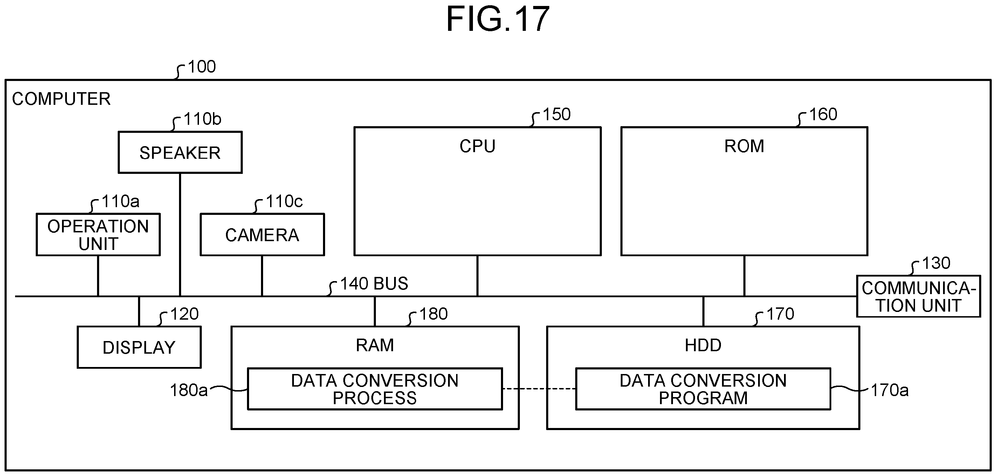

Various processes described in the above Examples can be achieved by executing prepared computer programs on a computer such as a personal computer or workstation. Therefore, an example of a computer executing a data conversion program with the functions similar to those in Example 1 and Example 2 is described below with reference to FIG. 17.

FIG. 17 is a diagram illustrating an example of a hardware configuration. As illustrated in FIG. 17, a computer 100 includes an operation unit 110a, a speaker 110b, a camera 110c, a display 120, and a communication unit 130. In addition, this computer 100 includes a CPU 150, a ROM 160, an HDD 170, and a RAM 180. These units 110 to 180 are connected via a bus 140.

As illustrated in FIG. 17, the HDD 170 stores therein a data conversion program 170a that performs the functions similar to those of the functional units included in the control unit 15 described in Example 1 above. This data conversion program 170a may be integrated or separated, as well as each component of the functional units included in the control unit 15 illustrated in FIG. 1. In other words, the HDD 170 does not need to store the entire data described in Example 1 above, and only the data used for processing may be stored in the HDD 170.

Under this circumstance, the CPU 150 reads out the data conversion program 170a from the HDD 170 and then develops this computer program to the RAM 180. As a result, the data conversion program 170a functions as a data conversion process 180a as illustrated in FIG. 17. In this data conversion process 180a, various kinds of data read from the HDD 170 are developed to the area allocated to the data conversion process 180a among the storage areas possessed by the RAM 180, and various kinds of processes are performed using the developed various kinds of data. Examples of the process to be performed by the data conversion process 180a include the processes illustrated in FIG. 14 and FIG. 15. In the CPU 150, all the processing units described in Example 1 above do not need to operate, and the processing unit that corresponds to the process to be performed may be virtually achieved.

The above data conversion program 170a does not need to be stored in the HDD 170 or the ROM 160 from the beginning. For example, each computer program is stored in a "portable physical medium" such as a flexible disk, so-called FD, a CD-ROM, a DVD disk, a magneto-optical disk, or an IC card that is inserted into the computer 100. The computer 100 may then acquire and execute each computer program from these portable physical media. The computer programs may be stored in other computers or server devices that are connected to the computer 100 via public lines, the Internet, LAN, WAN, etc., and the computer 100 may acquire and execute each computer program from these devices.

### Reference Signs List

10 SERVER DEVICE
11 COMMUNICATION CONTROL UNIT
13 STORAGE UNIT
13A1 FIRST IMAGE DATABASE
13A2 SECOND IMAGE DATABASE
13T CONVERSION TABLE
15 CONTROL UNIT
15A INVERSE LOG CURVE APPLICATION UNIT
15B INVERSE ELEMENT GAIN ADJUSTMENT UNIT
15C TABLE CONVERSION UNIT
15D PIXEL DENSITY CORRECTION UNIT
15E WATERMARK BLUR CORRECTION UNIT
15F TRANSPORTATION FILTER ADDITION UNIT
15G LOG CURVE APPLICATION UNIT
30 CLIENT TERMINAL

## Claims

1. A data conversion device comprising:
an acquisition unit that acquires image data output from a first line sensor; and
a conversion unit that converts pixel values included in the image data output from the first line sensor, in accordance with correspondence relation data in which a correspondence relation of pixel values is set based on a sensitivity difference for a spectral characteristic between the first line sensor and a second line sensor that is different from the first line sensor.

2. The data conversion device according to claim 1, wherein the correspondence relation data is set by histogram matching of two pieces of image data obtained when the same medium is read by the first line sensor and the second line sensor.

3. The data conversion device according to claim 1, further comprising a multiplying unit that multiplies an inverse element gain to eliminate an influence of a transportation mechanism of a model for the first line sensor on an output of an imaging element of the first line sensor, by the pixel values included in the image data output from the first line sensor, wherein
the conversion unit converts the pixel values included in the image data after the inverse element gain is multiplied.

4. The data conversion device according to claim 3, wherein based on an output in a case where a medium with uniform reflection density and transmission density is read by the first line sensor, a coefficient at which the output of the imaging element of the first line sensor becomes a target value of the line sensor corresponding to a density of the medium is set for the inverse element gain.

5. The data conversion device according to claim 1, further comprising a correction unit that corrects a degree of blurring of a watermark part of a banknote in the image data in which the pixel values are converted by the conversion unit in accordance with a difference between a gap between a banknote transportation path and an imaging element of the first line sensor and a gap between a banknote transportation path and an imaging element of the second line sensor.

6. The data conversion device according to claim 1, further comprising a multiplying unit that multiplies a transportation filter that adds an influence of a transportation mechanism of a model for the second line sensor on an output of an imaging element of the second line sensor, by the image data in which the pixel values are converted by the conversion unit.

7. The data conversion device according to claim 6, wherein the transportation filter is set based on a difference between the density of the medium with the uniform reflection density and transmission density and an output in a case where the medium is read by the second line sensor.

8. A data conversion method causing a computer to execute a process comprising:
acquiring image data output from a first line sensor; and
converting pixel values included in the image data output from the first line sensor, in accordance with correspondence relation data in which a correspondence relation of pixel values is set based on a sensitivity difference for a spectral characteristic between the first line sensor and a second line sensor that is different from the first line sensor.

9. A data conversion program that causes a computer to execute a process comprising:
acquiring image data output from a first line sensor; and
converting pixel values included in the image data output from the first line sensor, in accordance with correspondence relation data in which a correspondence relation of pixel values is set based on a sensitivity difference for a spectral characteristic between the first line sensor and a second line sensor that is different from the first line sensor.
